# EUROPÄISCHE PATENTSCHRIFT

(11) **EP 2 625 051 B1**
(45) Veröffentlichungstag und Bekanntmachung des Hinweises auf die Patenterteilung: **08.07.2015**
(21) Anmeldenummer: 11749185.2
(22) Anmeldetag: 30.08.2011
(51) Int. Cl.: B60H 1/00, B60H 1/14

(54) **KLIMATISIERUNGSVORRICHTUNG UND VERFAHREN ZUM KLIMATISIEREN EINES INNENRAUMES UND/ODER MINDESTENS EINES BAUTEILS EINES ELEKTROFAHRZEUGES**
AIR-CONDITIONING DEVICE AND METHOD FOR AIR-CONDITIONING AN INTERIOR AND/OR AT LEAST ONE COMPONENT OF AN ELECTRIC VEHICLE
DISPOSITIF DE CLIMATISATION ET PROCÉDÉ POUR LA CLIMATISATION D'UN ESPACE INTÉRIEUR ET/OU D'AU MOINS UNE PIÈCE D'UN VÉHICULE ÉLECTRIQUE

(30) Priorität: 08.10.2010 DE 102010042195
(43) Veröffentlichungstag der Anmeldung: 14.08.2013
(73) Patentinhaber: Robert Bosch GmbH, 70442 Stuttgart (DE)
(72) Erfinder: TSCHISMAR, Oliver, 72555 Metzingen (DE)
(86) Internationale Anmeldenummer: PCT/EP2011/064866
(87) Internationale Veröffentlichungsnummer: WO 2012/045528

(56) Entgegenhaltungen:
- DE-A1- 19 609 048
- US-A1- 2008 028 768
- US-A1- 2009 260 377

## Beschreibung

Die vorliegende Erfindung betrifft eine Klimatisierungsvorrichtung und ein Verfahren zum Klimatisieren eines Innenraumes und/oder mindestens eines Bauteils eines Elektrofahrzeuges.

### Stand der Technik

In der DE 196 09 048 C2 wird eine Heizungs- und Klimatisierungseinrichtung für Kraftfahrzeuge beschrieben, wobei die beschriebene Heizungs- und Klimatisierungseinrichtung einen ersten Flüssigkeitskreis aufweist, der einen Wärmetauscher, eine Pumpe und eine Wärmequelle zur Erwärmung der Flüssigkeit umfasst, wobei der Wärmetauscher sekundärseitig mit Luft beaufschlagt ist und ein Gebläse zur Erzeugung eines Luftstroms vorgesehen ist. Ferner umfasst die beschriebene Heizungs- und Klimatisierungseinrichtung einen Kältekreis mit einem Verdampfer, einem Kondensator und einem Kompressor und ein Steuergerät zur Regelung des Kältekreis in Abhängigkeit mindestens eines Signals eines Temperatursensors und eines einstellbaren Sollwertes. Die beschriebene Heizungs- und Klimatisierungseinrichtung umfasst ferner einen über ein Ventilmittel dem ersten Flüssigkeitskreis zuschaltbaren zweiten Flüssigkeitskreis mit darin angeordnetem Thermospeicher sowie einer Pumpe, wobei eine Wärmequelle im ersten Flüssigkeitskreis eine vom Betrieb des Fahrzeugs unabhängige Heizeinrichtung ist, die zur Erwärmung der durch den Wärmetauscher strömenden Luft und/oder zum Laden des Thermospeichers mit Wärmeenergie dient, wobei der Verdampfer des Kältekreises mittels des zweiten Flüssigkeitskreises mit dem Wärmetauscher thermisch koppelbar ist und zum Laden des Thermospeichers mit Kälteenergie dient.

### Offenbarung der Erfindung

Es ist daher Aufgabe der Erfindung, eine Klimatisierungsvorrichtung und ein Verfahren zum Klimatisieren eines Innenraumes und/oder mindestens eines Bauteils eines Elektrofahrzeuges bereitzustellen, welche vielfältig einsetzbar ist und sich leicht an unterschiedliche Anforderungen anpassen lässt.

Diese Aufgabe wird die durch die Klimatisierungsvorrichtung zum Klimatisieren eines Innenraumes und/oder mindestens eines Bauteils eines Elektrofahrzeuges mit den Merkmalen des Patentanspruchs 1 und ein Verfahren zum Klimatisieren eines Innenraumes und/oder mindestens eines Bauteils eines Elektrofahrzeuges gemäß des Patentanspruchs 9 gelöst.

Demgemäß wird erfindungsgemäß eine Klimatisierungsvorrichtung und ein Verfahren zum Klimatisieren eines Innenraumes und/oder mindestens eines Bauteils eines Elektrofahrzeuges bereitgestellt, wobei die Klimatisierungsvorrichtung mehrere Fluidkreisläufe mit jeweiligen Arbeitsmedien aufweist und zur Erwärmung und zur Kühlung des Elektrofahrzeuges ausgelegt ist, wobei ein erster Fluidkreislauf von einer ersten Pumpe, über eine Wärmequelle, weiter über ein Vier-Wege-Ventil und über einen ersten Wärmeübertrager, weiter über einen dritten Wärmeübertrager und über ein erstes Drei-Wege-Ventil wieder zurück zu der ersten Pumpe einschaltbar und zur Erwärmung des Innenraumes des Elektrofahrzeuges über den ersten Wärmeübertrager ausgebildet ist. Ein zweiter Fluidkreislauf ist von der ersten Pumpe über die Wärmequelle weiter über das Vier-Wege-Ventil und einen zweiten Wärmeübertrager mit einem ersten Verdampfer wieder zurück an die erste motorbetriebene Pumpe einschaltbar und zur Erwärmung des ersten Verdampfers ausgebildet. Ein dritter Fluidkreislauf ist von dem ersten Verdampfer des zweiten Wärmeübertragers über einen inneren Wärmeübertrager, weiter über einen Verdichter und eine zweite Pumpe, über einen dritten Wärmeübertrager mit einem zweiten Verdampfer, über ein federbelastetes Rückschlagventil, weiter über den inneren Wärmeübertrager und eine erste Drossel, weiter über ein zweites Drei-Wege-Ventil in einer ersten Stellung wieder zurück an den zweiten Wärmeübertrager einschaltbar und zur Erwärmung des dritten Wärmeübertragers ausgebildet, wobei der dritte Fluidkreislauf mit einem in einer zweiten Stellung befindlichen zweiten Drei-Wege-Ventil und mit einem geöffneten Durchgangsventil einen fünften Wärmeübertrager anstelle des federbelasteten Rückschlagventils und einen vierten Wärmeübertrager anstelle des zweiten Wärmeübertragers aufweist und zur Kühlung des Innenraumes des Elektrofahrzeuges über den vierten Wärmeübertrager ausgebildet ist. Ein vierter Fluidkreislauf ist von dem dritten Wärmeübertrager über das erste Drei-Wege-Ventil und eine dritte Pumpe an den ersten Wärmeübertrager zurück zu dem dritten Wärmeübertrager einschaltbar und unter Verwendung von einer vom dritten Fluidkreislauf über den dritten Wärmeübertrager empfangenen Wärmemenge zur Erwärmung des Innenraumes des Elektrofahrzeuges über den ersten Wärmeübertrager ausgebildet, wobei ein fünfter Fluidkreislauf von der ersten motorbetriebenen Pumpe, über die Wärmequelle weiter über das Vier-Wege-Ventil und einen sechsten Wärmeübertrager weiter über den zweiten Wärmeübertrager und wieder zurück zu der ersten motorbetriebenen Pumpe einschaltbar ist und zur Kühlung der Wärmequelle des mindestens einen Bauteils des Elektrofahrzeuges ausgebildet ist.

Die Idee der Erfindung liegt darin, eine optimale Klimatisierung des Elektrofahrzeuges durch den effektiven Einsatz von im Elektrofahrzeug verfügbaren Wärmequelle zu erreichen indem die Klimatisierungsvorrichtung über adaptiert einsetzbare Fluidkreisläufe verfügt.

### Vorteile der Erfindung

Die Vorteile der Erfindung sind ein effizienter Betrieb der Klimatisierungsvorrichtung durch eine Abwärmenutzung von Bauteilen des Elektrofahrzeuges und/oder Nutzung von thermischen Massen als Wärmequellen. Durch die Klimatisierungsvorrichtung kann auch eine Wärmequelle, welche ein im Vergleich zum benötigten Temperaturniveau niedriges Temperaturniveau aufweist, verwendet werden. Ferner wird eine Vereisungen der Klimatisierungsvorrichtung vermieden, da die Abwärme von Bauteilen des Elektrofahrzeuges und/oder von thermischen Massen verwendet wird. Die Komponenten der Klimatisierungsvorrichtung werden darüber hinaus auch in geringerem Umfang belastet, da die Wärmeübertrager der Klimatisierungsvorrichtung bei relativ niedrigen Betriebstemperaturen arbeiten und somit keine thermischen Belastungen auf die Wärmeübertrager und die Klimavorrichtung einwirken und die Klimavorrichtung über keinen mit Kältemitteln betriebenen Hochdruckbereich eines Fluidkreislaufes verfügt.

In den Unteransprüchen finden sich vorteilhafte Weiterbildungen und Verbesserungen des jeweiligen Gegenstandes der Erfindung.

Gemäß einer bevorzugten Weiterbildung weist die Wärmequelle der Klimatisierungsvorrichtung eine thermische Masse eines Elektromotors, einer Leistungselektronik und/oder einer Traktionsbatterie des Elektrofahrzeuges auf.

Gemäß einer weiteren, bevorzugten Weiterbildung sind der erste und/oder der zweite und/oder der dritte und/oder der vierte Fluidkreislauf der Klimatisierungsvorrichtung als ein Kühlmittelkreislauf mit einem im Kreislauf zirkulierenden Kühlmittel als Arbeitsmedium ausgeführt, wobei eine entsprechende Pumpe zur Zirkulation des Arbeitsmediums vorgesehen ist.

Gemäß einer weiteren, bevorzugten Weiterbildung sind der zweite Wärmeübertrager und/oder der dritte Wärmeübertrager und/oder der innere Wärmeübertrager der Klimatisierungsvorrichtung als ein Kreuz-Gegenstrom-Wärmeübertrager ausgebildet sind.

Gemäß einer weiteren, bevorzugten Weiterbildung ist der erste und/oder der vierte Wärmeübertrager und/oder der fünfte Wärmeübertrager und/oder der sechste Wärmeübertrager der Klimatisierungsvorrichtung als ein aktiver Wärmeübertrager mit einem zusätzlich montierten Lüfter ausgeführt.

Gemäß einer weiteren, bevorzugten Weiterbildung umfasst das zu klimatisierende mindestens eine Bauteil des Elektrofahrzeuges einen in einem bevorzugten Temperaturbereich zu betreibenden elektrischen Energiespeicher des Elektrofahrzeuges.

Gemäß einer weiteren, bevorzugten Weiterbildung weist die Klimatisierungsvorrichtung in dem dritten Fluidkreislauf eine weitere, zweite Drossel auf, um den zweiten Wärmeüberträger und den vierten Wärmeüberträger mit Arbeitsmedien mit unterschiedlich Arbeitsdrücken zu versorgen, wodurch ein gleichzeitiges Heizen und/oder Kühlen und Entfeuchten des Innenraumes des Elektrofahrzeuges erreichbar ist.

Gemäß einer weiteren, bevorzugten Weiterbildung sind als Wärmequelle der Klimatisierungsvorrichtung thermische Massen einer Karosserie, eines Fahrgestells oder eines Fahrwerks des Elektrofahrzeuges mit tieferen Temperaturen vorgesehen, wodurch indirekt auch das Elektrofahrzeug umströmende Luft als Wärmequelle verwendet werden kann.

Gemäß einer bevorzugten Weiterbildung wird bei dem Verfahren der dritter Fluidkreislauf als ein Kältemittelkreislauf mit Kohlenstoffdioxid, besonders bevorzugt mit dem Kältemittel R744, betrieben.

### Kurze Beschreibung der Zeichnungen

Ausführungsbeispiele der Erfindung sind in den Zeichnungen dargestellt und in der nachfolgenden Beschreibung näher erläutert.

Es illustrieren:
- Fig. 1: eine schematische Darstellung des Aufbaus der Klimatisierungsvorrichtung gemäß einer Ausführungsform der vorliegenden Erfindung;
- Fig. 2: eine schematische Darstellung des Aufbaus der Klimatisierungsvorrichtung mit zwei Expansionsorganen gemäß einer weiteren Ausführungsform der vorliegenden Erfindung;
- Fig. 3: eine schematische Darstellung des Aufbaus der Klimatisierungsvorrichtung mit einer gekennzeichneten Ventilstellung der Ventile des ersten Fluidkreislaufes gemäß einer weiteren Ausführungsform der vorliegenden Erfindung;
- Fig. 4: eine schematische Darstellung des Aufbaus der Klimatisierungsvorrichtung mit einer weiteren gekennzeichneten Ventilstellung der Ventile des zweiten, dritten und vierten Fluidkreislaufes gemäß einer weiteren Ausführungsform der vorliegenden Erfindung;
- Fig. 5: eine schematische Darstellung des Aufbaus der Klimatisierungsvorrichtung mit einer weiteren gekennzeichneten Ventilstellung der Ventile des dritten und fünften Fluidkreislaufes gemäß einer weiteren Ausführungsform der vorliegenden Erfindung.

### Beschreibung der Ausführungsbeispiele

In den Figuren bezeichnen gleiche Bezugszeichen gleiche oder funktionsgleiche Komponenten.

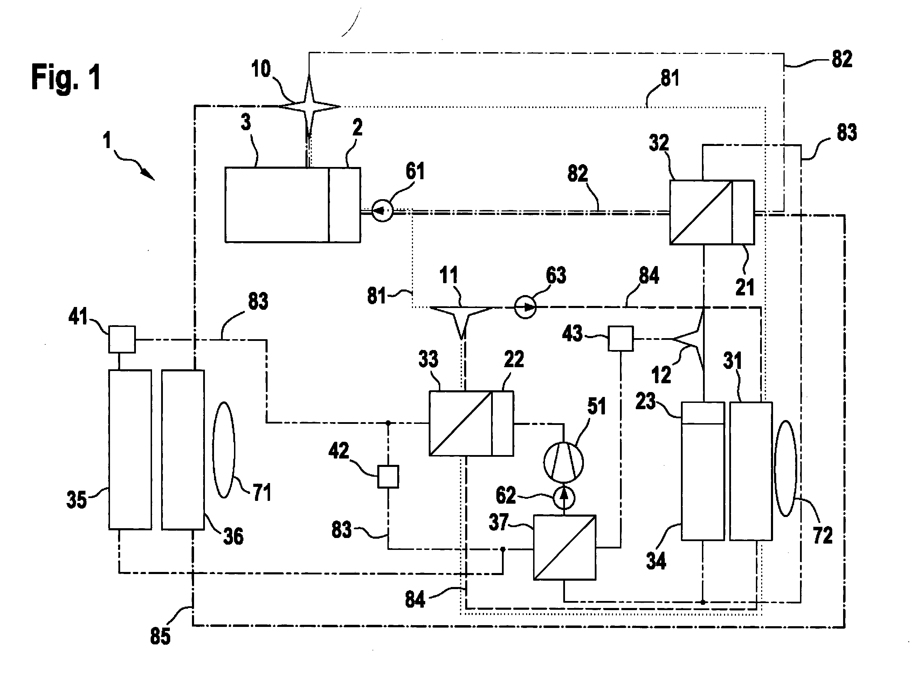

Die Figur 1 zeigt eine schematische Darstellung des Aufbaus der Klimatisierungsvorrichtung 1 gemäß einer Ausführungsform der vorliegenden Erfindung. Die Klimatisierungsvorrichtung 1 umfasst beispielsweise eine Leistungselektronik 2 mit einem Elektromotor 3 als Wärmequelle, wobei auch weitere thermische Masse des Elektrofahrzeuges als Wärmequelle verwendet werden können wie beispielsweise eine Batterie. Ein Vierwegeventil 10 und ein erstes Drei-Wege-Ventil 11 sowie ein zweites Drei-Wege-Ventil 12 dienen der Steuerung der Arbeitsmedien durch die jeweiligen Fluidkreisläufe 81-85. Ein erster Fluidkreislauf 81 führt von einer ersten Pumpe 61, über eine Wärmequelle 2, 3 weiter über das Vier-Wege-Ventil 10, welches in einer ersten von zwei möglichen Stellung befindlich ist, und über einen ersten Wärmeübertrager 31, weiter über einen dritten Wärmeübertrager 33 und über das erstes Drei-Wege-Ventil 11 wieder zurück zu der ersten Pumpe 61. Ein zweiter Fluidkreislauf 82 führt vorzugsweise von der ersten Pumpe 61 über die Wärmequelle 2, 3 weiter über das Vier-Wege-Ventil 10 und einen zweiten Wärmeübertrager 32 mit einem ersten Verdampfer 21 wieder zurück an die erste motorbetriebene Pumpe 61. Ein dritter Fluidkreislauf 83 führt von dem ersten Verdampfer 21 des zweiten Wärmeübertragers 32 über einen inneren Wärmeübertrager 37, weiter über einen Verdichter 51 und eine zweite Pumpe 62, über einen dritten Wärmeübertrager 33 mit einem zweiten Verdampfer 22, über ein federbelastetes Rückschlagventil 42, weiter über den inneren Wärmeübertrager 37 und eine erste Drossel 43, weiter über ein zweites Drei-Wege-Ventil 12 in einer ersten Stellung wieder zurück an den zweiten Wärmeübertrager 32. Der dritte Fluidkreislauf 83 umfasst ferner mit einem in einer zweiten Stellung befindlichen zweiten Drei-Wege-Ventil 12 und mit einem geöffneten Durchgangsventil 41 einen fünften Wärmeübertrager 35 anstelle des federbelasteten Rückschlagventils 42 und einen vierten Wärmeübertrager 34 mit einem dritten Verdampfer 23 anstelle des zweiten Wärmeübertragers 32. Durch die zweite Stellung des zweiten Drei-Wege-Ventil 12 kann der dritte Kühlkreislauf eine Kühlung des Innenraumes des Elektrofahrzeuges über den vierten Wärmeübertrager 34 erwirken, wobei die Kühlwirkung durch einen zweiten Lüfter 72, welcher an dem vierten Wärmeübertrager 34 und/oder am ersten Wärmeübertrager 31 montiert ist, verstärkt werden kann. Ein vierter Fluidkreislauf 84 führt von dem dritten Wärmeübertrager 33 über das erste Drei-Wege-Ventil 11 und eine dritte Pumpe 63 an den ersten Wärmeübertrager 31 zurück zu dem dritten Wärmeübertrager 33. Der vierte Fluidkreislauf 84 dient zur Erwärmung des Innenraumes des Elektrofahrzeuges über den ersten Wärmeübertrager 31, wobei vorzugsweise der an dem ersten Wärmeübertrager 31 montierte Lüfter 72 zur Beschleunigung des Wärmetransports von dem ersten Wärmeübertrager 31 in den Innenraum des Elektrofahrzeuges betätigt wird. Ein fünfter Fluidkreislauf 85 führt von der ersten Pumpe 61, über die Wärmequelle 2, 3 weiter über das Vier-Wege-Ventil 10 und einen mit einem ersten Lüfter 71 ausgestatteten sechsten Wärmeübertrager 36, weiter über den zweiten Wärmeübertrager 32 und wieder zurück zu der ersten motorbetriebenen Pumpe 61. Der fünfte Fluidkreislauf 85 ist zur Kühlung von Bauteilen des Elektrofahrzeuges vorgesehen, wie beispielsweise elektrische Energiespeicher, Elektromotoren oder weitere wärmeabgebende Komponenten des Elektrofahrzeuges wie etwa eine Leistungselektronik.

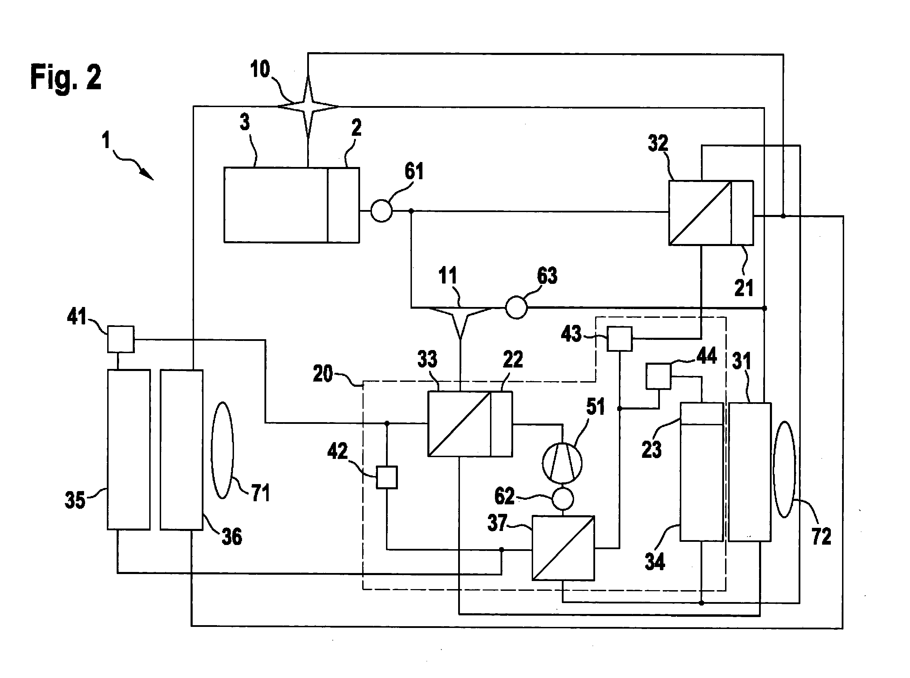

Die Figur 2 zeigt eine schematische Darstellung des Aufbaus der mit zwei Expansionsorganen gemäß einer weiteren Ausführungsform der vorliegenden Erfindung. Die Figur 2 zeigt im wesentlichen die gleichen Komponenten unter Verwendung der selben Bezugszeichen wie die Figur 1, ergänzend ist in der Figur 2 dargestellt, dass die gezeigte Ausführungsform der Klimatisierungsvorrichtung mit zwei Expansionsorganen ermöglicht, eine weitere Funktion im Sinne eines Entfeuchtens mit gleichzeitigem Heizen oder Kühlen zur Verfügung zu stellen. Die Verwendung von zwei Expansionsorganen oder Drosseln 43, 44 erlaubt insbesondere eine Entfeuchtung von in den Innenraum des Elektrofahrzeuges eingeleiteter Luft. Da unter der Verwendung der ersten Drossel 43 und der zweiten Drossel 44 der Wärmepumpenvorrichtung 20 entsprechend dem Aufbau der Klimatisierungsvorrichtung 1 durch den ersten Wärmeübertrager 31 und vierten Wärmeübertrager 34 die Einstellung von zwei unterschiedlichen Temperaturwerten an den ersten 31 und vierten Wärmeübertrager 34 möglich ist, kann bei einem im Vergleich zum Temperaturwerten des vierten Wärmeübertragers 34 niedrigen Temperaturwert des ersten Wärmeübertrager 31 die Luftfeuchte der einströmenden Luft an dem ersten Wärmeübertrager 31 auskondensiert werden, wobei die in den Innenraum des Elektrofahrzeuges eingeleitete Luft auf einen geringeren Wert einer relativen Luftfeuchtigkeit gebracht werden kann, wie es bei Verwendung eines einzigen Wärmeübertragers zur Temperierung der in den Innenraum des Elektrofahrzeuges eingeleiteten Luft der Fall wäre.

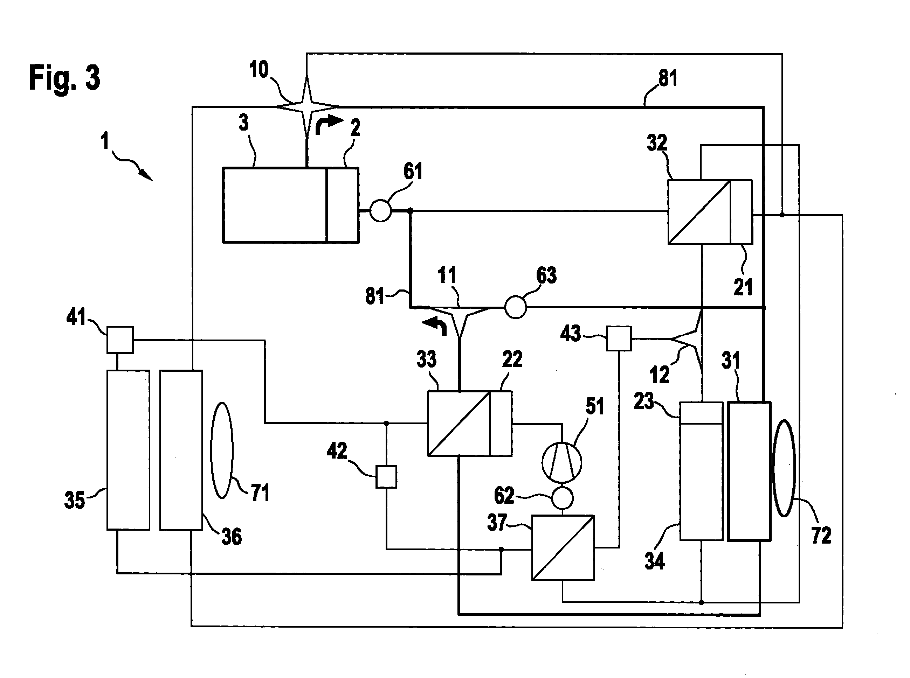

Die Figur 3 zeigt eine schematische Darstellung des Aufbaus der Klimatisierungsvorrichtung 1 mit einer gekennzeichneten Ventilstellung der Ventile des ersten Fluidkreislaufes 81 gemäß einer weiteren Ausführungsform der vorliegenden Erfindung. Die Figur 3 zeigt im wesentlichen die gleichen Komponenten unter Verwendung der selben Bezugszeichen wie die Figur 1, ergänzend ist in der Figur 2 dargestellt, dass das Vierwegeventil 10 in seiner ersten Stellung und das erstes Drei-Wege-Ventil 11 in seiner ersten Stellung durch die verwendeten Ventilstellungen den ersten Fluidkreislauf 81 bilden können, welcher zur Erwärmung des Innenraumes und/oder des mindestens einen Bauteils des Elektrofahrzeuges verwendet werden kann.

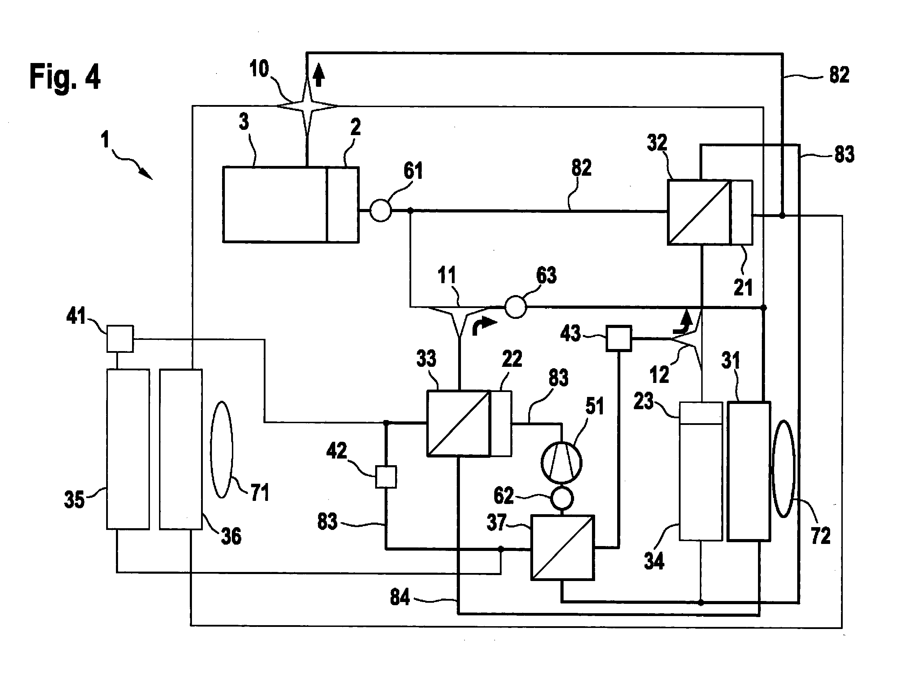

Die Figur 4 zeigt eine schematische Darstellung des Aufbaus der Klimatisierungsvorrichtung 1 mit einer weiteren gekennzeichneten Ventilstellung der Ventile des zweiten, dritten und vierten Fluidkreislaufes gemäß einer weiteren Ausführungsform der vorliegenden Erfindung. Die Figur 4 zeigt im wesentlichen die gleichen Komponenten unter Verwendung der selben Bezugszeichen wie die Figur 1, ergänzend ist in der Figur 2 dargestellt: Das zweite Drei-Wege-Ventil 12 verbindet in einer ersten Stellung den dritten Fluidkreislauf 83 mit dem zweiten Fluidkreislauf 82 über den zweiten Wärmeübertrager 32. Das Vierwegeventil 10 bildet in einer zweiten Stellung den zweiten Fluidkreislauf 82. Das erstes Drei-Wege-Ventil 11 in einer zweiten Stellung bildet den vierten Fluidkreislauf 84.

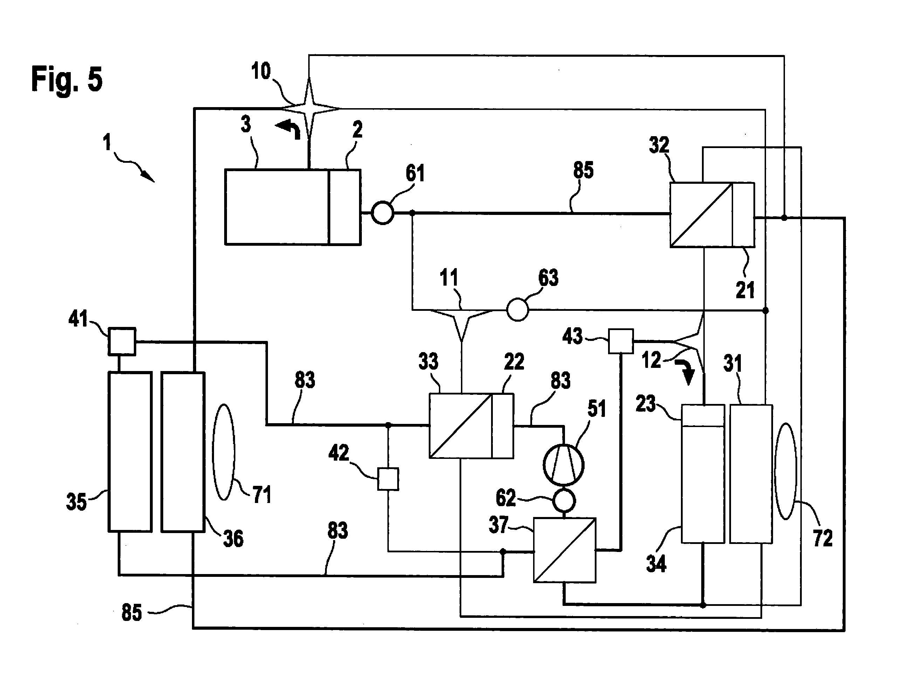

Die Figur 5 zeigt eine schematische Darstellung des Aufbaus der Klimatisierungsvorrichtung mit einer weiteren gekennzeichneten Ventilstellung der Ventile des dritten und fünften Fluidkreislaufes gemäß einer weiteren Ausführungsform der vorliegenden Erfindung. Die Figur 2 zeigt im wesentlichen die gleichen Komponenten unter Verwendung der selben Bezugszeichen wie die Figur 1, ergänzend ist in der Figur 2 dargestellt: Das Vierwegeventil 10 bildet in seiner dritten Stellung den fünften Fluidkreislauf 85. Das zweite Drei-Wege-Ventil 12 verbindet in einer zweiten Stellung den dritten Fluidkreislauf 83 mit dem vierten Wärmeübertrager 34, wodurch eine Kühlung des Innenraums des Elektrofahrzeuges ermöglicht wird.

Obwohl die vorliegende Erfindung vorstehend anhand bevorzugter Ausführungsbeispielen erläutert worden ist, ist sie nicht darauf beschränkt, sondern auch in anderer Weise ausführbar.

## Patentansprüche

1. Klimatisierungsvorrichtung (1) zum Klimatisieren eines Innenraumes und/oder mindestens eines Bauteils eines Elektrofahrzeuges, wobei die Klimatisierungsvorrichtung (1) mehrere Fluidkreisläufe (81, 82, 83, 84, 85) mit jeweiligen Arbeitsmedien aufweist und zur Erwärmung und zur Kühlung des Elektrofahrzeuges ausgelegt ist,
wobei ein erster Fluidkreislauf (81) von einer ersten Pumpe (61), über eine Wärmequelle (2, 3), weiter über ein Vier-Wege-Ventil (10) und über einen ersten Wärmeübertrager (31), weiter über einen dritten Wärmeübertrager (33) und über ein erstes Drei-Wege-Ventil (11) wieder zurück zu der ersten Pumpe (61) einschaltbar ist und zur Erwärmung des Innenraumes des Elektrofahrzeuges über den ersten Wärmeübertrager (31) ausgebildet ist;
wobei ein zweiter Fluidkreislauf (82) von der ersten Pumpe (61) über die Wärmequelle (2, 3) weiter über das Vier-Wege-Ventil (10) und einen zweiten Wärmeübertrager (32) mit einem ersten Verdampfer (21) wieder zurück an die erste motorbetriebene Pumpe (61) einschaltbar ist und zur Erwärmung des ersten Verdampfers (21) ausgebildet ist;
wobei ein dritter Fluidkreislauf (83) von dem ersten Verdampfer (21) des zweiten Wärmeübertragers (32) über einen inneren Wärmeübertragers (37), weiter über einen Verdichter (51) und eine zweite Pumpe (62), über den dritten Wärmeübertrager (33) mit einem zweiten Verdampfer (22), über ein federbelastetes Rückschlagventil (42), weiter über den inneren Wärmeübertrager (37) und eine erste Drossel (43), weiter über ein zweites Drei-Wege-Ventil (12) in einer ersten Stellung wieder zurück an den zweiten Wärmeübertrager (32) einschaltbar ist und zur Erwärmung des dritten Wärmeübertragers (33) ausgebildet ist,
wobei der dritte Fluidkreislauf (83) mit dem in einer zweiten Stellung befindlichen zweiten Drei-Wege-Ventil (12) und mit einem geöffneten Durchgangsventil (41) einen fünften Wärmeübertrager (35) anstelle des federbelasteten Rückschlagventils (42) und einen vierten Wärmeübertrager (34) anstelle des zweiten Wärmeübertragers (32) aufweist und zur Kühlung des Innenraumes des Elektrofahrzeuges über den vierten Wärmeübertrager (34) ausgebildet ist;
wobei ein vierter Fluidkreislauf (84) von dem dritten Wärmeübertrager (33) über das erste Drei-Wege-Ventil (11) und eine dritte Pumpe (63) an den ersten Wärmeübertrager (31) zurück zu dem dritten Wärmeübertrager (33) einschaltbar ist und unter Verwendung von einer vom dritten Fluidkreislauf (83) über den dritten Wärmeübertrager (33) empfangenen Wärmemenge zur Erwärmung des Innenraumes des Elektrofahrzeuges über den ersten Wärmeübertrager (31) ausgebildet ist; und
wobei ein fünfter Fluidkreislauf (85) von der ersten motorbetriebenen Pumpe (61), über die Wärmequelle (2, 3), weiter über das Vier-Wege-Ventil (10) und einen sechsten Wärmeübertrager (36), weiter über den zweiten Wärmeübertrager (32) und wieder zurück zu der ersten motorbetriebenen Pumpe (61) einschaltbar ist und zur Kühlung der Wärmequelle (2,3) des mindestens einen Bauteils des Elektrofahrzeuges ausgebildet ist.

2. Klimatisierungsvorrichtung nach Anspruch 1, wobei die Wärmequelle (2, 3) eine thermische Masse eines Elektromotors (3), einer Leistungselektronik (2) und/oder einer Traktionsbatterie des Elektrofahrzeuges umfasst.

3. Klimatisierungsvorrichtung nach Anspruch 1 oder 2, wobei der erste (81) und/oder der zweite (82) und/oder der dritte (83) und/oder der vierte (84) Fluidkreislauf als ein Kühlmittelkreislauf mit einem im Kreislauf zirkulierenden Kühlmittel als Arbeitsmedium ausgeführt sind, wobei eine entsprechende Pumpe (61, 62, 63) zur Zirkulation des Arbeitsmediums vorgesehen ist.

4. Klimatisierungsvorrichtung nach einem der Ansprüche 1-3, wobei der zweite Wärmeübertrager (32) und/oder der dritte Wärmeübertrager (33) und/oder der innere Wärmeübertrager (37) als ein Kreuz-Gegenstrom-Wärmeübertrager ausgebildet sind.

5. Klimatisierungsvorrichtung nach einem der Ansprüche 1-4, wobei der erste (31) und/oder der vierte Wärmeübertrager (34) und/oder der fünfte Wärmeübertrager (35) und/oder der sechste Wärmeübertrager (36) als ein aktiver Wärmeübertrager mit einem zusätzlich montierten Lüfter (71, 72) ausgeführt ist.

6. Klimatisierungsvorrichtung nach einem der Ansprüche 1-5, wobei das zu klimatisierende mindestens eine Bauteil des Elektrofahrzeuges einen in einem bevorzugten Temperaturbereich zu betreibenden elektrischen Energiespeicher des Elektrofahrzeuges umfasst.

7. Klimatisierungsvorrichtung nach einem der Ansprüche 1-6, wobei die Klimatisierungsvorrichtung (1) in dem dritten Fluidkreislauf (83) eine weitere, zweite Drossel (44) aufweist, um den zweiten Wärmeüberträger (32) und den vierten Wärmeüberträger (34) Arbeitsmedien mit unterschiedlich Arbeitsdrücken zu versorgen, wodurch ein gleichzeitiges Heizen und/oder Kühlen und Entfeuchten des Innenraumes des Elektrofahrzeuges erreichbar ist.

8. Klimatisierungsvorrichtung nach einem der Ansprüche 1-8, wobei als Wärmequelle der Klimatisierungsvorrichtung (1) thermischen Massen einer Karosserie, eines Fahrgestells oder eines Fahrwerks des Elektrofahrzeuges mit tieferen Temperaturen vorgesehen sind.

9. Verfahren zum Klimatisieren eines Innenraumes und/oder mindestens eines Bauteils eines Elektrofahrzeuges, wobei das Verfahren eine Klimatisierungsvorrichtung (1) mit Fluidkreisläufen (81, 82, 83, 84, 85) mit zirkulierenden und thermische Energie transportierenden Arbeitsmedien automatisch steuert und zur Erwärmung und zur Kühlung des Innenraumes und/oder des mindestens einen Bauteils des Elektrofahrzeuges verwendet wird,
wobei ein erster Fluidkreislauf (81) von einer ersten motorbetriebenen Pumpe (61), über eine Wärmequelle (2, 3), weiter über ein Vier-Wege-Ventil (10) und über einen ersten Wärmeübertrager (31), weiter über einen dritten Wärmeübertrager (33) und über ein erstes Drei-Wege-Ventil (11) wieder zurück zu der ersten motorbetriebenen Pumpe (61) ausgebildet wird und zur Erwärmung eines Innenraumes des Elektrofahrzeuges über einen ersten Wärmeübertrager (31) verwendet wird;
wobei ein zweiter Fluidkreislauf (82) von der ersten motorbetriebenen Pumpe (61) über die Wärmequelle (2, 3) weiter über das Vier-Wege-Ventil (10) und einen zweiten Wärmeübertrager (32) mit einem ersten Verdampfer (21) wieder zurück an die erste motorbetriebene Pumpe (61) ausgebildet wird und zur Erwärmung des ersten Verdampfers (21) verwendet wird;
wobei ein dritter Fluidkreislauf (83) von dem ersten Verdampfer (21) des zweiten Wärmeübertragers (32) über einen inneren Wärmeübertrager (37), weiter über einen Verdichter (51) mit einer zweiten motorbetrieben Pumpe (62), über einen dritten Wärmeübertrager (33) mit einem zweiten Verdampfer (22) und ein federbelastetes Rückschlagventil (42), weiter über den inneren Wärmeübertrager (37) und eine erste Drossel (43), weiter über ein zweites Drei-Wege-Ventil (12) in einer ersten Stellung wieder zurück an den zweiten Wärmeübertrager (32) ausgebildet wird und zur Erwärmung des dritten Wärmeübertragers (33) verwendet wird, wobei der dritter Fluidkreislauf (83) in einer zweiten Stellung des zweiten Drei-Wege-Ventils (12) und mit einem geöffneten Durchgangsventil (41) einem fünften Wärmeübertrager (35) anstelle des federbelasteten Rückschlagventils (42) und einen vierten Wärmeübertrager (34) anstelle des zweiten Wärmeübertragers (32) aufweist und zur Kühlung des Innenraumes des Elektrofahrzeuges über den vierten Wärmeübertrager (34) verwendet wird;
wobei ein vierter Fluidkreislauf (84) von dem dritten Wärmeübertrager (33) über das erste Drei-Wege-Ventil (11) und eine dritte motorbetriebene Pumpe (63) an den ersten Wärmeübertrager (31) zurück zu dem dritten Wärmeübertrager (33) ausgebildet wird, und unter Verwendung von einer vom dritten Fluidkreislauf (83) über den dritten Wärmeübertrager (33) empfangenen Wärmemenge zur Erwärmung des Innenraumes des Elektrofahrzeuges über den ersten Wärmeübertrager (31) verwendet wird;
wobei ein fünfter Fluidkreislauf (85) von der ersten motorbetriebenen Pumpe (61), über die Wärmequelle (2, 3), weiter über das Vier-Wege-Ventil (10) und einen sechsten Wärmeübertrager (36), weiter über einen zweiten Wärmeübertrager (32) und wieder zurück zu der ersten motorbetriebenen Pumpe (61) ausgebildet wird, und zur Kühlung der Wärmequelle (2,3) des mindestens einen Bauteils des Elektrofahrzeuges verwendet wird.

10. Verfahren nach Anspruch 9, wobei der dritter Fluidkreislauf (83) als ein Kältemittelkreislauf mit Kohlenstoffdioxid, besonders bevorzugt mit dem Kältemittel R744, betrieben wird.

## Claims

1. Air-conditioning device (1) for air-conditioning a passenger compartment and/or at least one component of an electric vehicle, wherein the air-conditioning device (1) has a plurality of fluid circuits (81, 82, 83, 84, 85) with respective working media and is configured to heat and to cool the electric vehicle,
wherein a first fluid circuit (81) from a first pump (61) via a heat source (2, 3), on via a four-way valve (10) and via a first heat exchanger (31), on via a third heat exchanger (33) and via a first three-way valve (11) and back again to the first pump (61) can be switched on and is designed to heat the passenger compartment of the electric vehicle by means of the first heat exchanger (31);
wherein a second fluid circuit (82) from the first pump (61) via the heat source (2, 3), on via the four-way valve (10) and a second heat exchanger (32) with a first vaporizer (21) and back again to the first motor-driven pump (61) can be switched on and is designed to heat the first vaporizer (21);
wherein a third fluid circuit (83) from the first vaporizer (21) of the second heat exchanger (32) via an internal heat exchanger (37), on via a compressor (51) and a second pump (62), via the third heat exchanger (33) with a second vaporizer (22), via a spring-loaded non-return valve (42), and on via the internal heat exchanger (37) and a first choke (43), and on via a second three-way valve (12) and in a first position and back again to the second heat exchanger (32) can be switched on and is designed to heat the third heat exchanger (33),
wherein the third fluid circuit (83) with the second three-way valve (12) in a second position and with an open straight-way valve (41) has a fifth heat exchanger (35) instead of the spring-loaded non-return valve (42) and a fourth heat exchanger (34) instead of the second heat exchanger (32) and is designed to cool the passenger compartment of the electric vehicle by means of the fourth heat exchanger (34);
wherein a fourth fluid circuit (84) from the third heat exchanger (33) via the first three-way valve (11) and a third pump (63) to the first heat exchanger (31) and back to the third heat exchanger (33) can be switched on, and is designed to use a quantity of heat received from the third fluid circuit (83) via the third heat exchanger (33) to heat the passenger compartment of the electric vehicle by means of the first heat exchanger (31); and
wherein a fifth fluid circuit (85) from the first motor-driven pump (61), via the heat source (2, 3), on via the four-way valve (10) and a sixth heat exchanger (36), and on via the second heat exchanger (32) and back again to the first motor-driven pump (61) can be switched on and is designed to cool the heat source (2, 3) of the at least one component of the electric vehicle.

2. Air-conditioning device according to Claim 1, wherein the heat source (2, 3) comprises a thermal mass of an electromotor (3), power electronics (2) and/or a traction battery of the electric vehicle.

3. Air-conditioning device according to Claim 1 or 2, wherein the first fluid circuit (81) and/or the second fluid circuit (82) and/or the third fluid circuit (83) and/or the fourth fluid circuit (84) are/is embodied as a coolant circuit with a coolant which circulates in the circuit as a working medium, wherein a corresponding pump (61, 62, 63) is provided for circulating the working medium.

4. Air-conditioning device according to one of Claims 1-3, wherein the second heat exchanger (32) and/or the third heat exchanger (33) and/or the internal heat exchanger (37) are/is embodied as a cross/counterflow heat exchanger.

5. Air-conditioning device according to one of Claims 1-4, wherein the first heat exchanger (31) and/or the fourth heat exchanger (34) and/or the fifth heat exchanger (35) and/or the sixth heat exchanger (36) are/is embodied as an active heat exchanger with an additionally mounted fan (71, 72).

6. Air-conditioning device according to one of Claims 1-5, wherein the at least one component of the electric vehicle which is to be air-conditioned comprises an electric energy accumulator of the electrical vehicle which is to be operated in a preferred temperature range.

7. Air-conditioning device according to one of Claims 1-6, wherein the air-conditioning device (1) has a further, second choke (44) in the third fluid circuit (83) in order to supply the second heat exchanger (32) and the fourth heat exchanger (34) with working media at different working pressures, as a result of which it is possible to heat and/or cool and dehumidify the passenger compartment of the electric vehicle simultaneously.

8. Air-conditioning device according to one of Claims 1-8, wherein thermal masses of a bodywork, of a chassis or of a running gear of the electric vehicle are provided as a heat source of the air-conditioning device (1) at relatively low temperatures.

9. Method for air-conditioning a passenger compartment and/or at least one component of an electric vehicle, wherein the method automatically controls an air-conditioning device (1) with fluid circuits (81, 82, 83, 84, 85) with circulating working media which transport thermal energy, and is used to heat and to cool the passenger compartment and/or the at least one component of the electric vehicle,
wherein a first fluid circuit (81) is formed from a first motor-driven pump (61), via a heat source (2, 3) and on via a four-way valve (10) and via a first heat exchanger (31), and on via a third heat exchanger (33) and via a first three-way valve (11) and back again to the first motor-driven pump (61), and is used to heat a passenger compartment of the electric vehicle via a first heat exchanger (31);
wherein a second fluid circuit (82) is formed from the first motor-driven pump (61) via the heat source (2, 3) and on via the four-way valve (10) and a second heat exchanger (32) with a first vaporizer (21) and back again to the first motor-driven pump (61) and is used to heat the first vaporizer (21);
wherein a third fluid circuit (83) is formed from the first vaporizer (21) of the second heat exchanger (32) via an internal heat exchanger (37) and on via a compressor (51) with a second motor-driven pump (62), and via a third heat exchanger (33) with a second vaporizer (22), and a spring-loaded non-return valve (42) and on via the internal heat exchanger (37) and a first choke (43) and on via a second three-way valve (12) in a first position and back again to the second heat exchanger (32) and is used to heat the third heat exchanger (33), wherein the third fluid circuit (83) has, in a second position of the second three-way valve (12) and with an open straight-way valve (41), a fifth heat exchanger (35) instead of the spring-loaded non-return valve (42), and a fourth heat exchanger (34) instead of the second heat exchanger (32) and is used to cool the passenger compartment of the electric vehicle via the fourth heat exchanger (34);
wherein a fourth fluid circuit (84) is formed from the third heat exchanger (33) via the first three-way valve (11) and a third motor-driven pump (63) to the first heat exchanger (31) and back to the third heat exchanger (33), and is used to heat the passenger compartment of the electric vehicle via the first heat exchanger (31) by using a quantity of heat which is received from the third fluid circuit (83) via the third heat exchanger (33);
wherein a fifth fluid circuit (85) is formed from the first motor-driven pump (61), via the heat source (2, 3) and on via the four-way valve (10) and a sixth heat exchanger (36) and on via a second heat exchanger (32) and back again to the first motor-driven pump (61), and is used to cool the heat source (2, 3) of the at least one component of the electric vehicle.

10. Method according to Claim 9, wherein the third fluid circuit (83) is operated as a coolant circuit with carbon dioxide particularly preferably with the coolant R744.

## Revendications

1. Dispositif de climatisation (1) pour la climatisation d'un espace intérieur et/ou d'au moins une pièce d'un véhicule électrique, le dispositif de climatisation (1) comprenant plusieurs circuits de fluide (81, 82, 83, 84, 85) pourvus de fluides de travail respectifs et étant conçu pour le chauffage et pour le refroidissement du véhicule électrique,
un premier circuit de fluide (81) pouvant être connecté à partir d'une première pompe (61), via une source de chaleur (2, 3), puis via une soupape à quatre voies (10) et via un premier échangeur de chaleur (31) puis via un troisième échangeur de chaleur (33) et via une première soupape à trois voies (11) puis de retour à la première pompe (61), et étant réalisé pour le chauffage de l'espace intérieur du véhicule électrique par le biais du premier échangeur de chaleur (31) ;
un deuxième circuit de fluide (82) pouvant être connecté à partir de la première pompe (61) via la source de chaleur (2, 3), puis via la soupape à quatre voies (10) et un deuxième échangeur de chaleur (32) doté d'un premier évaporateur (21) puis de retour à la première pompe (61) entraînée par un moteur, et étant réalisé pour le chauffage du premier évaporateur (21) ;
un troisième circuit de fluide (83) pouvant être connecté à partir du premier évaporateur (21) du deuxième échangeur de chaleur (32) via un échangeur de chaleur intérieur (37), puis via un compresseur (51) et une deuxième pompe (62), via le troisième échangeur de chaleur (33) comprenant un deuxième évaporateur (22), via une soupape anti-retour (42) sollicitée par ressort, puis via l'échangeur de chaleur intérieur (37) et un premier étranglement (43), puis via une deuxième soupape à trois voies (12) dans une première position, puis de retour au deuxième échangeur de chaleur (32), et étant réalisé pour le chauffage du troisième échangeur de chaleur (33),
le troisième circuit de fluide (83) doté de la deuxième soupape à trois voies (12) se trouvant dans une deuxième position et doté d'une soupape de passage ouverte (41) comprenant un cinquième échangeur de chaleur (35) au lieu de la soupape anti-retour (42) sollicitée par ressort et un quatrième échangeur de chaleur (34) au lieu du deuxième échangeur de chaleur (32), et étant réalisé pour le refroidissement de l'espace intérieur du véhicule électrique par le biais du quatrième échangeur de chaleur (34) ;
un quatrième circuit de fluide (84) pouvant être connecté à partir du troisième échangeur de chaleur (33) via la première soupape à trois voies (11) et une troisième pompe (63), de retour au troisième échangeur de chaleur (33) au niveau du premier échangeur de chaleur (31), et étant réalisé pour le chauffage de l'espace intérieur du véhicule électrique par le biais du premier échangeur de chaleur (31) en utilisant une quantité de chaleur reçue du troisième circuit de fluide (83) par le biais du troisième échangeur de chaleur (33) ; et
un cinquième circuit de fluide (85) pouvant être connecté à partir de la première pompe (61) entraînée par un moteur, via la source de chaleur (2, 3), puis via la soupape à quatre voies (10) et un sixième échangeur de chaleur (36), puis via le deuxième échangeur de chaleur (32) puis de retour à la première pompe (61) entraînée par un moteur, et étant réalisé pour le refroidissement de la source de chaleur (2, 3) de l'au moins une pièce du véhicule électrique.

2. Dispositif de climatisation selon la revendication 1, dans lequel la source de chaleur (2, 3) comporte une masse thermique d'un moteur électrique (3), d'une électronique de puissance (2) et/ou d'une batterie de traction du véhicule électrique.

3. Dispositif de climatisation selon la revendication 1 ou 2, dans lequel le premier (81) et/ou le deuxième (82) et/ou le troisième (83) et/ou le quatrième (84) circuit de fluide sont réalisés en tant que circuit de réfrigérant comprenant un réfrigérant circulant dans le circuit en tant que fluide de travail, une pompe correspondante (61, 62, 63) étant prévue pour la circulation du fluide de travail.

4. Dispositif de climatisation selon l'une quelconque des revendications 1 à 3, dans lequel le deuxième échangeur de chaleur (32) et/ou le troisième échangeur de chaleur (33) et/ou l'échangeur de chaleur intérieur (37) sont réalisés en tant qu'échangeur de chaleur à contre-courant croisé.

5. Dispositif de climatisation selon l'une quelconque des revendications 1 à 4, dans lequel le premier (31) et/ou le quatrième échangeur de chaleur (34) et/ou le cinquième échangeur de chaleur (35) et/ou le sixième échangeur de chaleur (36) sont réalisés en tant qu'échangeur de chaleur actif comprenant un ventilateur (71, 72) monté en plus.

6. Dispositif de climatisation selon l'une quelconque des revendications 1 à 5, dans lequel l'au moins une pièce à climatiser du véhicule électrique comporte un accumulateur d'énergie électrique, devant fonctionner dans une plage de températures préférée, du véhicule électrique.

7. Dispositif de climatisation selon l'une quelconque des revendications 1 à 6, le dispositif de climatisation (1) comprenant un deuxième étranglement supplémentaire (44) dans le troisième circuit de fluide (83), afin d'alimenter le deuxième échangeur de chaleur (32) et le quatrième échangeur de chaleur (34) en fluides de travail présentant différentes pressions de travail, de sorte qu'un chauffage et/ou un refroidissement et une déshumidification simultanés de l'espace intérieur du véhicule électrique puissent être obtenus.

8. Dispositif de climatisation selon l'une quelconque des revendications 1 à 8, des masses thermiques d'une carrosserie, d'un châssis ou d'un train de roulement du véhicule électrique présentant des températures plus basses étant prévues en tant que source de chaleur du dispositif de climatisation (1).

9. Procédé de climatisation d'un espace intérieur et/ou d'au moins une pièce d'un véhicule électrique, le procédé commandant automatiquement un dispositif de climatisation (1) comprenant des circuits de fluide (81, 82, 83, 84, 85) dotés de fluides de travail circulant et transportant de l'énergie thermique, et étant utilisé pour le chauffage et pour le refroidissement de l'espace intérieur et/ou de l'au moins une pièce du véhicule électrique,
un premier circuit de fluide (81) étant réalisé à partir d'une première pompe (61) entraînée par un moteur, via une source de chaleur (2, 3), puis via une soupape à quatre voies (10) et via un premier échangeur de chaleur (31) puis via un troisième échangeur de chaleur (33) et via une première soupape à trois voies (11) puis de retour à la première pompe (61) entraînée par un moteur, et étant utilisé pour le chauffage d'un espace intérieur du véhicule électrique par le biais d'un premier échangeur de chaleur (31) ;
un deuxième circuit de fluide (82) étant réalisé à partir de la première pompe (61) entraînée par un moteur via la source de chaleur (2, 3), puis via la soupape à quatre voies (10) et un deuxième échangeur de chaleur (32) doté d'un premier évaporateur (21) puis de retour à la première pompe (61) entraînée par un moteur, et étant utilisé pour le chauffage du premier évaporateur (21) ;
un troisième circuit de fluide (83) étant réalisé à partir du premier évaporateur (21) du deuxième échangeur de chaleur (32) via un échangeur de chaleur intérieur (37), puis via un compresseur (51) à l'aide d'une deuxième pompe (62) entraînée par un moteur, via un troisième échangeur de chaleur (33) comprenant un deuxième évaporateur (22) et une soupape anti-retour (42) sollicitée par ressort, puis via l'échangeur de chaleur intérieur (37) et un premier étranglement (43), puis via une deuxième soupape à trois voies (12) dans une première position, puis de retour au deuxième échangeur de chaleur (32), et étant utilisé pour le chauffage du troisième échangeur de chaleur (33), le troisième circuit de fluide (83) dans une deuxième position de la deuxième soupape à trois voies (12) et avec une soupape de passage ouverte (41) comprenant un cinquième échangeur de chaleur (35) au lieu de la soupape anti-retour (42) sollicitée par ressort et un quatrième échangeur de chaleur (34) au lieu du deuxième échangeur de chaleur (32), et étant utilisé pour le refroidissement de l'espace intérieur du véhicule électrique par le biais du quatrième échangeur de chaleur (34) ;
un quatrième circuit de fluide (84) étant réalisé à partir du troisième échangeur de chaleur (33) via la première soupape à trois voies (11) et une troisième pompe (63) entraînée par un moteur, de retour au troisième échangeur de chaleur (33) au niveau du premier échangeur de chaleur (31), et étant utilisé pour le chauffage de l'espace intérieur du véhicule électrique par le biais du premier échangeur de chaleur (31) en utilisant une quantité de chaleur reçue du troisième circuit de fluide (83) par le biais du troisième échangeur de chaleur (33) ; et
un cinquième circuit de fluide (85) étant réalisé à partir de la première pompe (61) entraînée par un moteur, via la source de chaleur (2, 3), puis via la soupape à quatre voies (10) et un sixième échangeur de chaleur (36), puis via le deuxième échangeur de chaleur (32) puis de retour à la première pompe (61) entraînée par un moteur, et étant utilisé pour le refroidissement de la source de chaleur (2, 3) de l'au moins une pièce du véhicule électrique.

10. Procédé selon la revendication 9, dans lequel le troisième circuit de fluide (83) fonctionne en tant que circuit de frigorigène comprenant du dioxyde de carbone, de manière particulièrement préférée comprenant le réfrigérant R744.
